# EUROPÄISCHE PATENTSCHRIFT

(11) **EP 0 821 343 B1**
(45) Veröffentlichungstag und Bekanntmachung des Hinweises auf die Patenterteilung: **04.07.2001**
(21) Anmeldenummer: 97106415.9
(22) Anmeldetag: 18.04.1997
(51) Int. Cl.: G10K 11/34, G01S 3/808

(54) **Verfahren zum Bilden von Gruppensignalen**
Method for forming signal groups
Procédé pour former des groupes de signaux

(30) Priorität: 23.07.1996 DE 19629689
(43) Veröffentlichungstag der Anmeldung: 28.01.1998
(73) Patentinhaber: STN ATLAS Elektronik GmbH, 28305 Bremen (DE)
(72) Erfinder: Brenner, Axel, Dipl.-Ing., 28259 Bremen (DE); Loges, Werner, Dipl.-Ing., 28357 Bremen (DE); Helmbold, Frank, Dipl.-Ing., 28325 Bremen (DE)
(74) Vertreter: Thul, Hermann, Dipl.-Phys.

(56) Entgegenhaltungen:
- DE-A- 2 136 780
- DE-A- 3 512 519
- DE-A- 3 920 705
- FR-A- 2 049 666

## Beschreibung

Die Erfindung bezieht sich auf ein Verfahren zum Bilden von Gruppensignalen der im Oberbegriff des Anspruchs 1 genannten Art.

Bei der Wasser- oder Luftschallortung werden von einem Wasser-, Land- oder Luftfahrzeug abgestrahlte Geräusche oder reflektierte Schallwellen empfangen und zu Gruppensignalen zusammengefaßt, um Peilung und ggf. auch Entfernung zum Fahrzeug zu bestimmen. Eine Empfangsanordnung einer Schallortungsanlage weist eine Vielzahl elektroakustischer Wandler - Hydrophone oder Mikrophone - und einen Richtungsbildner auf, in dem Empfangssignale jeweils einer kleineren Anzahl aus der Vielzahl der Wandler oder aller Wandler zu Gruppensignalen einer oder mehrerer Richtcharakteristik(en) verarbeitet werden. Ihre Hauptempfangsrichtungen sind schwenkbar und/oder weisen in benachbarte Richtungen, um schallabstrahlende oder reflektierende Fahrzeuge in einem Panorama oder Teilpanorama zu detektieren und zu peilen oder zu orten.

Die Empfangsanordnung wird abhängig von der Aufgabenstellung gewählt und ist entweder eine gerade, lineare Antenne, z.B. towed array oder flank array, eine Zylinderbasis oder eine gebogene Basis, z.B. Hufeisenbasis. Bei der linearen Antenne sind die Wandler längs einer Linie, z.B. Geraden, vorzugsweise äquidistant angeordnet. Bei einer Zylinderbasis sind die Wandler nebeneinander im Kreis angeordnet, bei einer gebogenen Basis oder conformal array sind die Wandler beispielsweise längs der Kontur eines Trägerfahrzeugs, z.B. um den Bug eines Wasserfahrzeugs (Hufeisenbasis) oder an seiner Längsseite angeordnet.

Bei einer linearen Antenne werden zum Bilden des Gruppensignals einer Richtcharakteristik die Empfangssignale der längs der Geraden angeordneten Wandler summiert. Die Hauptempfangsrichtung der Richtcharakteristik weist in Richtung der Senkrechten auf die Antenne. Der Öffnungswinkel ihrer Hauptkeule ist durch die Frequenz der Empfangssignale und die Länge der Antenne bestimmt. Für mehrere Richtcharakteristiken, deren Hauptempfangsrichtungen einen Fächer aufspannen und gegenüber der Senkrechten unterschiedliche Empfangswinkel aufweisen, werden die Empfangssignale der Wandler abhängig von dem Empfangswinkel der Hauptempfangsrichtung zur Senkrechten so gegeneinander verzögert, daß Laufzeitunterschiede der Schallwelle aufgrund ihrer Einfallsrichtung bis zum Eintreffen am Wandlerort kompensiert werden. Zur Berechnung der Laufzeitverzögerung wird eine Referenzlinie senkrecht zur Hauptempfangsrichtung vorgesehen und das Lot von jedem Wandler auf die Referenzlinie ermittelt. Das Lot wird durch die Ausbreitungsgeschwindigkeit des Schalls geteilt und ergibt eine Gesamtverzögerung für das Empfangssignal jedes Wandlers. Die mit ihren individuellen Gesamtverzögerungen beaufschlagten Empfangssignale der Wandler werden summiert und bilden das Gruppensignal. Amplituden der Gruppensignale benachbarter Richtcharakteristiken werden verglichen. Die größte Amplitude weist das Gruppensignal auf, deren Richtcharakteristik mit ihrer Hauptkeule in die Einfallsrichtung der Schallwellen weist. Sie gibt die Peilung zum Ziel an.

Bei benachbarten, sich überlappenden Richtcharakteristiken bilden für eine genauere Angabe der Peilung die Amplituden der Gruppensignale Stützstellen einer Interpolationsfunktion, z. B. einer Parabel, deren Maximum die Peilung zum Ziel angibt, auch wenn keine Hauptempfangsrichtungen der Richtcharakteristiken exakt mit der Einfallsrichtung des empfangenen Schalls übereinstimmt.

Bei einer Kreis- oder Zylinderbasis sind die elektroakustischen Wandler im Kreis angeordnet. Eine Anzahl von Wandlern auf einem Kreisbogen wird zum Bilden der Richtcharakteristik ausgewählt. Die zu dem Kreisbogen gehörende Sehne ist die Referenzlinie, die senkrecht zur Hauptempfangsrichtung der Richtcharakteristik liegt. Das Lot jedes der Wandler auf diese Referenzlinie bestimmt die Gesamtverzögerung für das Empfangssignal des betreffenden Wandlers. Die verzögerten Empfangssignale der Wandler auf dem Kreisbogen werden zum Gruppensignal der Richtcharakteristik aufsummiert.

Wenn die Richtcharakteristik entsprechend dem Wandlerraster in ihrer Hauptempfangsrichtung geschwenkt werden soll, werden die gleichen Gesamtverzögerungen für die um einen Wandler versetzten Wandler benötigt, da die Anzahl der Wandler und ihre geometrische Lage in bezug auf die geschwenkte Referenzlinie die gleiche ist, wie bei der Referenzlinie der vorher betrachteten Richtcharakteristik. Eine solche Empfangsanordnung mit Richtungsbildner ist beispielsweise aus der DE-OS 21 36 780 bekannt. Die im Kreis angeordnete Vielzahl von Wandlern wird wiederholt nacheinander abgetastet und ihre Empfangssignale in der Reihenfolge der Abtastung in einem Speicher abgespeichert.

Zwischen den Abtastzeitpunkten des gleichen Wandlers liegt eine Abtastperiode, die gleich dem Reziprokwert einer nach dem Abtasttheorem von Shannon oder Nyquist gewählten Abtastfrequenz für das Empfangssignal ist. Die Speicherfrequenz, mit der die Empfangssignale in den Speicher eingespeichert werden, ist ein Vielfaches dieser Abtastfrequenz, nämlich gleich der mit der Vielzahl sämtlicher Wandler auf der Zylinderbasis multiplizierten Abtastfrequenz. Die für das Empfangssignal benötigte Gesamtverzögerung wird durch eine Zahl von Abtastperioden angenähert und durch ein Vorrücken des Empfangssignals in dem Speicher realisiert. Durch Interpolation zwischen zwei nach Ablauf der Zahl von Abtastperioden aufeinanderfolgenden, abgespeicherten Empfangssignalen des gleichen Wandlers, zwischen denen eine Abtastperiode liegt, wird eine bessere Annäherung durch eine Restphasenverschiebung an die nötige Gesamtverzögerung erreicht. Da bei einer Zylinderbasis für alle benachbarten Richtcharakteristiken die geometrische Anordnung der jeweils auf einem Kreisbogen liegenden Wandler und ihre Anzahl gleich groß ist, wird immer ein gleicher Satz von Gesamtverzögerungen aus Abtastperioden und Restphasenverschiebung für die Anzahl der Empfangssignale benötigt.

Bei einem Conformal Array gemäß DE-OS 21 36 780, bei dem die Empfangsanordnung der Kontur der Außenwand eines Trägerfahrzeugs angepaßt ist, ist die Anordnung der Wandler nicht rotationssymmetrisch. Notwendige Gesamtverzögerungen für die Empfangssignale der Wandler zum Bilden benachbarter Richtcharakterstiken müssen für die einzelnen Richtcharakteristiken individuell bestimmt werden. Bei einer sog. Hufeisenbasis am Bug eines Wasserfahrzeugs liegt die Anzahl der Wandler, die zum Bilden einer Richtcharakteristik in Vorausrichtung verwendet wird, auf einer gekrümmten Linie, während die Anzahl der Wandler für Richtcharakteristiken, deren Hauptempfangsrichtung seitlich zum Wasserfahrzeug weisen, im wesentlichen auf einer geraden Linie liegt. Auch hier werden die einzelnen Wandler nacheinander abgetastet und die für den jeweiligen Wandler notwendige Gesamtverzögerung aus Abtastperioden und ggf. einer Restphasenverschiebung angenähert.

Eine Realisierung, wie sie in der genannten DE-OS 21 36 780 beschrieben ist, ist in den genannten Beispielen bestechend einfach. Benachbarte Wandler auf der Empfangsanordnung werden abgetastet, ihre Empfangssignale in einen Speicher eingelesen, aus dem sie je Wandler im Zeitabstand der Abtastperiode auslesbar sind. Da diese Quantisierung für eine Laufzeitverzögerung sehr grob ist, führt die Summation der so verzögerten Empfangssignale zu Fehlern in der Amplitude des Gruppensignals. Als Abhilfe wird in der DE-OS 21 36 780 eine Erhöhung der Abtastfrequenz und der Speicherkapazität oder eine Restphasenverschiebung durch Bewertung zweier im Abstand der Abtastperiode abgetasteten Empfangssignale des gleichen Wandlers und anschließende Addition vorgeschlagen. Die Restphasenverschiebung ist bei der Mittenfrequenz exakt gleich einer Restzeit aus notwendiger Gesamtverzögerung abzüglich der Zahl aus Abtastperioden. Fehler treten jedoch nach wie vor für Empfangssignale auf, deren Frequenz von einer Bezugs- oder Mittenfrequenz abweicht oder die eine große Bandbreite aufweisen, da durch die Interpolation keine Verzögerung um die Restzeit, sondern eine frequenzabhängige Restphasenverschiebung des Empfangssignals bewirkt wird. Insbesondere die Amplitude des verzögerten Empfangssignals ist für Frequenzen oberhalb der Mittenfrequenz zu klein, für Frequenzen unterhalb der Mittenfrequenz zu groß. Summiert man sämtliche phasenverschobenen Empfangssignale zum Gruppensignal auf, so erhält man einen Amplitudenfehler, der bei nicht rotationssymmetrischen Empfangsanordnungen von besonderer Bedeutung ist und unmittelbar die Güte der Peilung beeinträchtigt.

Es ist Aufgabe der vorliegenden Erfindung, ein Verfahren der im Oberbegriff des Anspruchs 1 angegebenen Art zu schaffen, bei dem die Annäherung an eine notwendige Gesamtverzögerung für das Empfangssignal durch eine Quantisierung der Laufzeitverzögerung in Abtastperioden und ggf. Interpolation für eine Restphasenverschiebung beibehalten bleibt, Amplitudenfehler jedoch vermieden werden.

Diese Aufgabe wird erfindungsgemäß durch die im Kennzeichenteil des Anspruchs 1 genannten Merkmale gelöst. Durch das Schaffen von Hilfsreferenzlinien parallel zur Referenzlinie innerhalb eines Grenzabstands zur Referenzlinie, der durch die Abtastperiode unter Berücksichtigung der Ausbreitungsgeschwindigkeit des Schalls bestimmt ist, werden die Fehler bei der Verzögerung der Empfangssignale durch die Mittelwertbildung der Amplituden ihrer auf die Referenzlinie und die Hilfsreferenzlinien bezogenen Summensignale verkleinert, da jeder auf die Referenz- und die Hilfsreferenzlinien bezogene Verzögerungssatz an Gesamtverzögerungen nach Abzug der größtmöglichen Zahl von Abtastperioden andere Restzeiten unkompensiert läßt. Die jeweils individuell anderen Fehler führen zu unterschiedlichen Amplituden der Summensignale, die sich bei der Summation zur Amplitude des gemittelten Gruppensignals ausgleichen. Ein weiterer Vorteil des erfindungsgemäßen Verfahrens nach Anspruch 1 besteht darin, daß Abtastfrequenz und Speicher unverändert bleiben und die erforderlichen Rechenzeiten so kurz sind, daß eine Peilung durch Auswerten, z.B. Vergleichen, der Amplituden von gemittelten Gruppensignalen benachbarter Richtcharakteristiken nach wie vor in Realzeit erfolgt. Weiterhin ist von Vorteil, daß die Richtungsbildung unabhängig vom Wandlerraster zu gleichen Amplituden des gemittelten Gruppensignals führen, auch dann, wenn sich die Annäherung der quantisierten Laufzeit an die notwendige Gesamtverzögerung verschlechtert.

Der Vorteil des erfindungsgemäßen Verfahrens nach Anspruch 2 besteht darin, daß ein Richtungsbildner, wie er beispielsweise aus der DE-OS 21 36 780 bekannt ist, unverändert eingesetzt werden kann. Bei einer vorgegebenen Anzahl von Hilfsreferenzlinien werden in Zeitabständen, die durch die Rechenzeit des Richtungsbildners vorgegeben sind, nacheinander die Empfangssignale mit den zu jeder Hilfsreferenzlinie gehörigen Verzögerungssatz bewertet und zum Summensignal aufaddiert. Die Amplituden der Summensignale werden sukzessive aufsummiert und liefern die konstante Amplitude des gemittelten Gruppensignals. Da jeweils nacheinander Verzögerungssätze benachbarter Hilfsreferenzlinien bereitgestellt werden, deren Abstände um vorgebbare Weginkremente bis zum Grenzabstand vergrößert und anschließend um die gleichen Weginkremente verkleinert werden, verändert sich die Gesamtverzögerung in aufeinanderfolgenden Verzögerungssätzen nahezu kontinuierlich, so daß keine Phasensprünge im gemittelten Gruppensignal weder innerhalb des Zyklus noch zu Beginn des nächsten Zyklus auftreten. Diese Eigenschaft bei der inkrementalen Verschiebung der Hilfsreferenzlinien entsprechend einer aufsteigenden und mit gleicher negativer Steigung abfallenden Dreiecksfunktion über der Zeit ist besonders für eine Auswertung empfangener Impulse zur Klassifizierung einer diese Impulse abstrahlenden Sonaranlage vorteilhaft. Insbesondere wird eine verwendbare Modulationsart durch das Bilden des gemittelten Gruppensignals gemäß der vorteilhaften Weiterbildung des erfindungsgemäßen Verfahrens nach Anspruch 2 nicht verfälscht, und auch eine Phasenmodulation kann sicher erkannt werden.

Bei einer Auswertung des gemittelten Gruppensignals nach dem DEMON-Verfahren, wie es beispielsweise aus der DE-PS 35 31 230 bekannt ist, hat sich gezeigt, daß eine konstante Zykluszeit für das Durchlaufen der Dreiecksfunktion beim Bilden des gemittelten Gruppensignals eine Spektrallinie im Frequenzspektrum des demodulierten Gruppensignals verursacht. Durch die vorteilhafte Weiterbildung des erfindungsgemäßen Verfahrens nach Anspruch 3 wird erreicht, daß sich durch variable Zykluszeiten keine feste Zyklusfrequenz ausbildet, so daß eine Auswertung des Frequenzspektrums des demodulierten gemittelten Gruppensignals ungestört ist und zu einer Klassifizierung des Ziels führt, dessen abgestrahltes Geräusch über die Richtcharakteristik empfangen wurde.

Auch mit einer einzigen durch Simulationsrechnung optimierten Hilfsreferenzlinie, bei der ein Minimum der Fehler der Amplituden der Gruppensignale gesucht wird, ist eine wesentliche Verbesserung bei der Detektion und der Peilgenauigkeit zu erzielen, wie es in der vorteilhaften Weiterbildung nach Anspruch 4 beschrieben ist. Besonders für Zylinderbasen ist dieses Verfahren von besonderem Vorteil, wenn die Anzahl der Hauptempfangsrichtungen ungleich der Anzahl der Wandler ist und die Sehne als Referenzlinie und ihre parallelen Hilfsreferenzlinien nicht im Wandlerraster liegen.

Ist die Empfangsanordnung gemäß der vorteilhaften Weiterbildung des erfindungsgemäßen Verfahrens nach Anspruch 5 an Bord eines Trägerfahrzeugs installiert zum Bestimmen nordbezogener Peilungen, dann werden bei jeder neuen Kompaßablesung unabhängig von der durch die Fahrzeugbewegung bedingten Lage der Empfangsanordnung sämtliche Referenz- und Hilfsreferenzlinien so geschwenkt, daß der Bezug zur Nordrichtung wieder hergestellt ist. Im Gegensatz zu der Richtungsbildung mit nur einer Referenzlinie, bei der sich durch das Schwenken aus dem Wandlerraster jeweils andere Fehler bei der Kompensation der Empfangssignale auf die Referenzlinie wegen anderer Restzeiten einstellen, wird durch das erfindungsgemäße Verfahren nach Anspruch 5 ein Ausgleich aller Fehler erzielt, so daß Amplitude oder Pegel des gemittelten Gruppensignals unabhängig von der Fahrzeugbewegung konstant bleibt. Das Ermitteln der jeweiligen Verzögerungssätze bezogen auf die geschwenkten Referenz- und Hilfsreferenzlinien sind beim heutigen Stand der Rechnertechnik zwischen zwei Kompaßablesungen problemlos zu leisten.

Besonders vorteilhaft ist es, die Amplituden der gemittelten Gruppensignale in einem festen Zeitraster über den nordbezogenen Hauptempfangsrichtungen zusammen mit der jeweiligen Kompaßablesung anzuzeigen, so daß die nordbezogene Peilung dem aktuellen Standort des Trägerfahrzeugs zugeordnet werden kann. Insgesamt führt die nordbezogene Bildung der Richtcharakteristiken zu einer Beruhigung der gesamten Lagedarstellung, da auch bei ruckartigen Bewegungen des Trägerfahrzeugs die nordbezogene Peilung so lange erhalten bleibt, bis das Ziel auswandert.

Durch das Schwenken der Referenz- und Hilfsreferenzlinien werden zwar andere Wandler und Gesamtverzögerungen zum Bilden des Gruppensignals verwendet, die Hauptempfangsrichtung der Richtcharakteristik weist durch den festen Bezug jedoch stets zum Ziel.

Die Weiterbildung des erfindungsgemäßen Verfahrens nach Anspruch 5 ist besonders vorteilhaft auch zusammen mit einer Zielverfolgungseinrichtung einsetzbar, da das Bilden der gemittelten Gruppensignale unabhängig von der Lage der Empfangsanordnung bezüglich des Ziels erfolgt. Stöße auf das Trägerfahrzeug, wie sie bei Wasserfahrzeugen durch Seegang hervorgerufen werden, führen nicht zum Detektions-, Ortungs- oder Auffaßverlust und auch nicht zu Änderungen oder Schwankungen des Pegels des gemittelten Gruppensignals trotz der winkelabhängigen Empfindlichkeit der Hauptkeule, da die Hauptkeule mit ihrer Hauptempfangsrichtung starr den gleichen Winkel zum Ziel beibehält.

Zur Erhöhung der Peilgenauigkeit wird mit den gemittelten Gruppensignalen mehrerer sich überlappender Richtcharakteristiken nach der vorteilhaften Weiterbildung nach Anspruch 6 eine Scheitelkurve interpoliert. Ihre unabhängige Variable ist der jeweilige Winkel der Hauptempfangsrichtung, ihre abhängigen Variablen die Amplituden der gemittelten Gruppensignale. Der Scheitel der Scheitelkurve oder ihr absolutes Maximum kennzeichnet die Einfallsrichtung der Schallwellen. In der DE-OS 38 32 678 ist ein solches Verfahren für Spektrallinien, die über eine Fast-Fourier-Transformation aus den Gruppensignalen abgeleitet werden, beschrieben. Abweichungen in der Amplitude des Gruppensignals, die bei der Annäherung der Gesamtverzögerung für ein breitbandiges Empfangssignal jedes Wandlers durch quantisierte Laufzeiten unvermeidbar wären, würden einen Fehler der Winkellage des Scheitels der Scheitelkurve bewirken. Der Vorteil der erfindungsgemäßen Weiterbildung nach Anspruch 6 besteht darin, daß die Amplituden der gemittelten Gruppensignale im gesamten Empfangsfrequenzbereich in exakter Relation zueinander bleiben und die typische winkelabhängige Empfindlichkeit der Hauptkeule der empfangenden Richtcharakteristiken erhalten bleibt. Diese Eigenschaft ist besonders bei einer kompaßbezogenen Bildung der Richtcharakteristiken von großem Vorteil.

Der besondere Vorteil der Weiterbildungen des erfindungsgemäßen Verfahrens nach den Ansprüchen 7 und 8 besteht darin, daß mit einer zusätzlichen Verschiebung der Empfangssignale um eine die Restzeit annähernde Restphasenverschiebung durch Interpolation mit mindestens zwei zu unterschiedlichen Zeiten abgetasteten Empfangssignalen eine weitere Verbesserung erzielt wird. Wegen der kurzen Rechenzeiten wird die Zahl der Hilfsreferenzlinien insbesondere bei nichtsymmetrischen Empfangsanordnungen individuell so groß gewählt, daß ein Restfehler vernachlässigbar klein ist.

Die Erfindung ist anhand eines Ausführungsbeispiels für eine Empfangsanordnung einer Sonaranlage zum Bilden von Gruppensignalen näher beschrieben. Es zeigen:
- Fig. 1: einen Ausschnitt einer Wandlerkonfiguration,
- Fig. 2: ein Laufzeitdiagramm,
- Fig. 2.1: einen Pegelverlauf der Gruppensignale in Abhängigkeit vom Abstand verschiedener Hilfsreferenzlinien bei quantisierter Laufzeitverzögerung,
- Fig. 3: ein Interpolationszeigerbild,
- Fig. 4: einen Pegelverlauf der Gruppensignale in Abhängigkeit vom Abstand verschiedener Hilfsreferenzlinien bei quantisierter Laufzeitverzögerung un Restphasenverschiebung,
- Fig. 5: ein Pegeldiagramm für mehrere Schwenkwinkel,
- Fig. 6: Pegeldiagramme bei mehreren Hilfsreferenzlinien für unterschiedliche Frequenzen und
- Fig. 7: ein Mittelungsergebnis der Pegeldiagramme von Fig. 6.

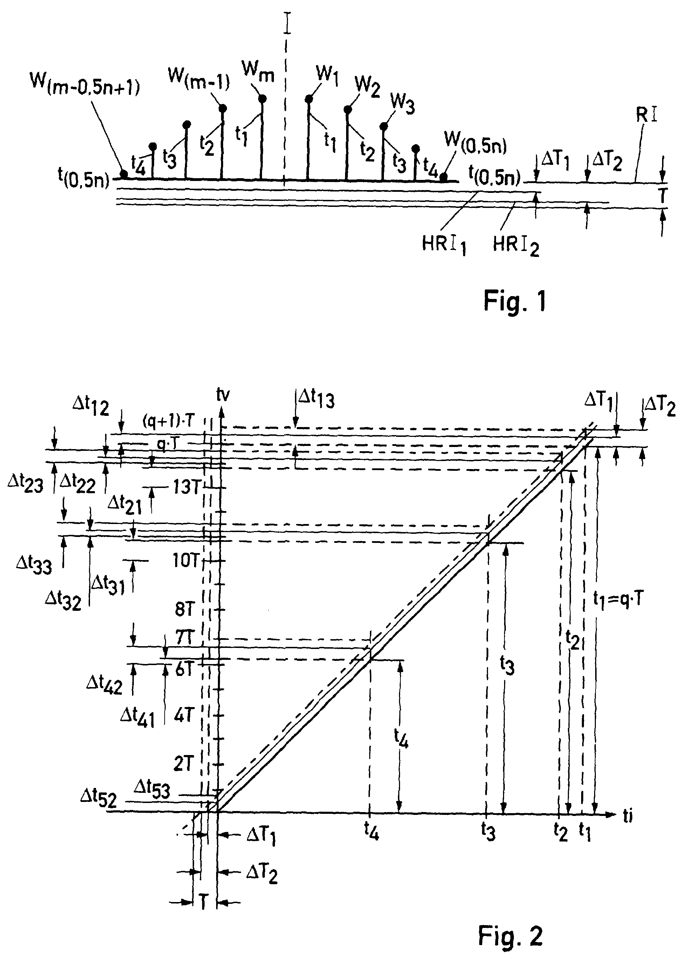

Eine Sonaranlage weist eine Empfangsanordnung mit einer Vielzahl m von elektroakustischen Wandlern Wᵢ (i = 1, 2, ..., n, ..., m) für den breitbandigen Empfang von Schallwellen auf, von denen eine kleinere Anzahl von n Wandlern W₁ bis W_{0,5n} und W_{m-0,5n+1} bis Wₘ zum Bilden einer Richtcharakteristik mit einer Hauptempfangsrichtung I verwendet wird. In Fig. 1 ist ein Kreissegment einer Zylinderbasis als Empfangsanordnung gezeigt. Ein Ausschnitt eines Conformal Array am Bug eines Wasserfahrzeugs hätte eine ähnliche Form. Eine aus der Hauptempfangsrichtung I einfallende Schallwelle wird zuerst von den Wandlern W₁ und Wₘ, etwas später von den Wandlern W₂ und Wₘ₋₁ und nach einer Gesamtverzögerung t₁ von den Wandlern W_{0,5n} und W_{m-0,5n+1} empfangen. Laufzeitunterschiede der Empfangssignale der n Wandler W_{i(i = 1, 2, ..., 0,5n, m-0,5n+1, ..., m)} werden zum Bilden eines Gruppensignals für eine Richtcharakteristik mit der Hauptempfangsrichtung I durch Gesamtverzögerungen t₁, t₂, ..., t_{0,5n} kompensiert. Zum Ermitteln der dafür notwendigen Gesamtverzögerung t₁, t₂, ..., t_{0,5n} ist von jedem Wandlerort ein Lot auf eine Referenzlinie R I gezeigt, das geteilt durch die Schallgeschwindigkeit die notwendige Gesamtverzögerung tᵢ für das Empfangssignal des betreffenden Wandlers Wᵢ angibt. Die laufzeitkompensierten, breitbandigen Empfangssignale der n Wandler Wᵢ werden zu einem Gruppensignal der Richtcharakteristik aufaddiert.

Eine entsprechende Signalverarbeitung ist in der DE-OS 21 36 780 angegeben. Die Wandler Wᵢ werden mit einer Abtastfrequenz entsprechend dem Abtasttheorem nach Shannon oder Nyquist abgetastet. Von jedem Wandler Wᵢ werden Abtastwerte des Empfangssignals in Zeitabständen in einen Speicher eingespeichert, die gleich dem Reziprokwert der Abtastfrequenz oder gleich der Abtastperiode T sind. Fig. 2 zeigt ein Laufzeitdiagramm realisierbarer, zeitlicher Verzögerungen tᵥ in Abhängigkeit von nötigen Gesamtverzögerungen tᵢ für die Empfangssignale an den kreisförmig angeordneten Wandlern Wᵢ gemäß Fig. 1 zum Bilden einer Richtcharakteristik mit der Hauptempfangsrichtung I. Auf einer in dem Laufzeitdiagramm eingezeichneten Winkelhalbierenden H des Koordinatensystems liegen alle die Punkte, bei denen die notwendigen Gesamtverzögerungen tᵢ gleich den realisierbaren zeitlichen Verzögerungen tᵥ sind. Werden zur Realisierung der nötigen Gesamtverzögerung tᵢ quantisierte Laufzeitverzögerungen, nämlich Vielfache der Abtastperioden T, benutzt, so ist dem Zeitdiagramm eine Restzeit Δt zu entnehmen, um die das Empfangssignal nach Ablauf der quantisierten Laufzeitverzögerung q·T zusätzlich zeitlich verschoben werden müßte.

Bei einer Summation der mit der quantisierten Laufzeitverzögerung beaufschlagten Empfangssignale zum Gruppensignal entstehen aufgrund der unterschiedlichen Phasenlagen der Empfangssignale Amplitudenfehler im Gruppensignal, deren Größe zusätzlich abhängig von der Lage der Referenzlinie zum Wandlerraster ist.

Diese Abhängigkeit wird dadurch überwunden, daß je Richtcharakteristik zu ihrer Hauptempfangsrichtung I zwei Hilfsreferenzlinien HRI1, HRI2 mit Abständen c·ΔT₁ und c·ΔT₂ zur Referenzlinie RI vorgesehen sind, die kleiner als ein Grenzabstand c·T sind, wobei c die Schallgeschwindigkeit und T die Abtastperiode ist. Der Grenzabstand c·T entspricht einer Laufzeit T der Schallwelle von einer Abtastperiode T. Das Lot jedes Wandlers Wᵢ auf die Referenzlinie RI und die Hilfsreferenzlinien RI₁ und RI₂, die um ΔT₁·c und ΔT₂·c verschoben sind, geteilt durch die Schallgeschwindigkeit c ergibt die Gesamtverzögerung gemäß Fig. 2 mit einer Quantisierung in Abtastperioden T und mit Restzeiten Δt entsprechend folgender Tabelle:

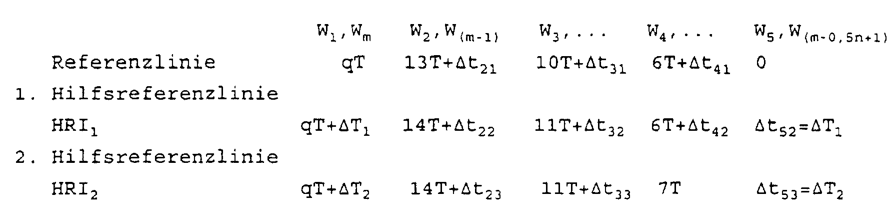

Das Empfangssignal des Wandlers W₁ bzw. Wₘ erfährt eine Gesamtverzögerung q·T und Hilfsgesamtverzögerungen q·T+ΔT₁ und q·T+ΔT₂ =(q+1)T. Das Empfangssignal des Wandlers W₂ bzw. Wₘ₋₁ wird für eine Kompensation auf die Referenzlinie RI um die Gesamtverzögerung 13·T+Δt₂₁ verzögert, auf die erste Hilfsreferenzlinie HRI₁ um die Hilfsgesamtverzögerung 14T+Δt₂₂ und für eine Kompensation auf die zweite Hilfsreferenzlinie HRI₂ um die Hilfsgesamtverzögerung 14T+Δt₂₃ verzögert. Bei Einsatz einer quantisierten Laufzeitverzögerung durch Vielfache der Abtastperiode T unterscheiden sich die zeitlichen Gesamtverzögerungen bezogen auf die Referenzlinie RI und die Hilfsreferenzlinien HRI₁ und HRI₂ um eine Abtastperiode T.

Jeder Reihe in der Tabelle ist der jeweilige Verzögerungssatz für die Empfangssignale der Wandler W₁, W₂, ..., W₅ und Wₘ-0, 5n+1, Wₘ-0, 5n, ... Wₘ die zum Bilden der Richtcharakteristik in die Hauptempfangsrichtung I herangezogen werden, zu entnehmen. Die Empfangssignale werden mit jedem der drei auf die Referenzlinie und die Hilfsreferenzlinie bezogenen Verzögerungssätze bewertet und jeweils zu einem Summensignal aufaddiert. Die Amplituden der Summensignale werden gemittelt und ergeben die Amplitude des gemittelten Gruppensignals der Richtcharakteristik, die in Hauptempfangsrichtung I weist.

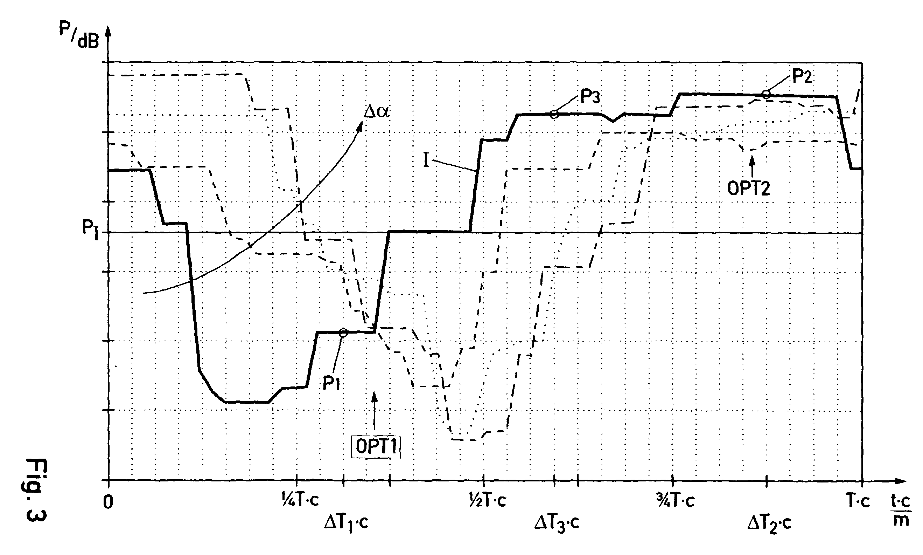

Durch Einführen der Hilfsreferenzlinien HRI₁ und HRI₂ im Abstand ΔT₁·c und ΔT₂·c zur Referenzlinie RI und Ermitteln von quantisierten Laufzeitverzögerungen in bezug auf die Hilfsreferenzlinien HRI₁ HRI₂ ergeben sich bei der Summation der auf die jeweiligen Hilfsreferenzlinien HRI kompensierten Empfangssignale unterschiedliche Amplituden. Fig. 3 zeigt mit ausgezogener Linie den Pegelverlauf der Amplitude P/dB der Gruppensignale in Abhängigkeit vom Abstand c·t verschiedener Hilfsreferenzlinien für die Hauptempfangsrichtung I. Die gestrichelten Linien geben Pegelverläufe für unterschiedliche Schwenkwinkel Δα der Hauptempfangsrichtung gegenüber der Richtung I an. Die zugehörigen Referenz- und Hilfsreferenzlinien zum Ermitteln der quantisierten Laufzeitverzögerungen sind ebenfalls um den Schwenkwinkel Δα geschwenkt.

Der sprunghafte Verlauf ergibt sich durch die grobe Quantisierung der Laufzeitverzögerung in Abtastperioden T. Eine Mittelwertbildung über alle Pegel P₁, P₂, P₃ ... des durchgezogen gezeichneten Pegelverlaufs, der der Richtcharakteristik mit der Hauptempfangsrichtung I zuzuordnen ist und der sich aus den auf die Referenzlinie RI und sämtliche Hilfsreferenzlinien HRI bei den Abständen t·c kompensierten Empfangssignalen bestimmt, ergibt einen Pegel P_{I} des gemittelten Gruppensignals. Nahezu der gleiche Pegel P_{I} wird bei einer Mittelwertbildung über jeden einzelnen, gestrichelt eingezeichneten Pegelverlauf, der unterschiedlichen Schwenkwinkel Δα zuzuordnen ist, bestimmt. Der Pegel P_{I} des gemittelten Gruppensignals ist unabhängig vom Schwenkwinkel Δα.

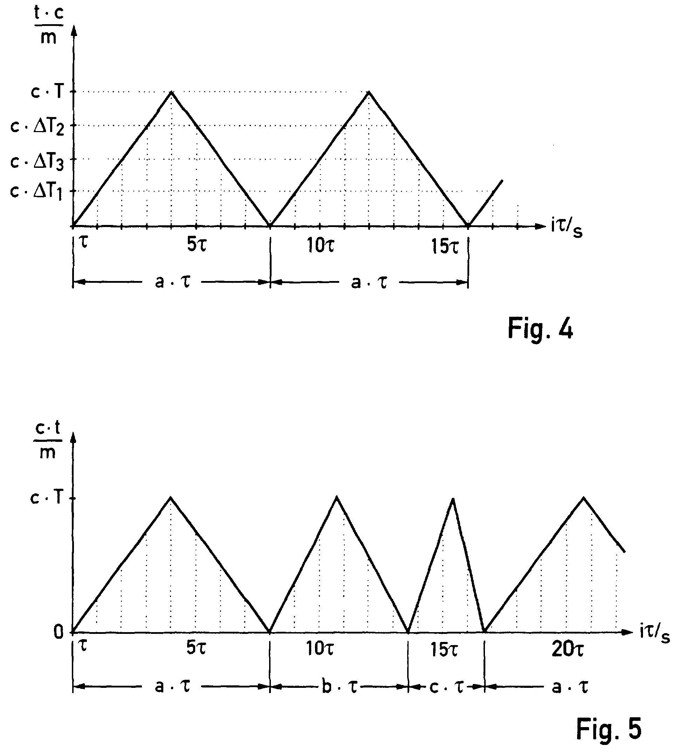

Die Anzahl der Hilfsreferenzlinien, die die Anzahl der Verzögerungssätze bestimmt, wird vorgegeben und entweder vorab berechnet und abgespeichert oder in Zeitabständen τ jeweils erneut berechnet und in den Zeitabständen τ zur Bewertung der Empfangssignale und ihrer Summation abgerufen. Die Zeitabstände τ sind durch notwendige Rechenzeit zum Berechnen der einzelnen Gruppensignale vorgegeben. Fig. 4 zeigt den Zeitablauf in einem Zeitdiagramm. Die Abstände t·c der Hilfsreferenzlinien HRI von der Referenzlinie RI bilden die abhängige Variable. Zur Zeit i·τ=0 wird der Verzögerungssatz, der zu einer Kompensation der Empfangssignale auf die Referenzlinie RI benötigt wird, abgerufen. Zur Zeit τ wird der nächste Verzögerungssatz zur Richtungsbildung in bezug auf die erste Hilfsreferenzlinie im Abstand c·ΔT₁ bereitgestellt. Zur Zeit 2τ der Verzögerungssatz zur Richtungsbildung in bezug auf die Hilfsreferenzlinie im Abstand c·ΔT₃ usw. Der Abstand c·t zwischen Referenzlinie und Hilfsreferenzlinien wächst mit jedem Zeitabstand τ. Im gezeigten Maßstab wird zur Zeit 4τ der Grenzabstand c·T erreicht und danach wird zur Zeit 5τ der Abstand c·t wieder verkleinert, so daß der Abstand c·t der Hilfsreferenzlinien in Abhängigkeit von der Zeit einer Dreiecksfunktion folgt. Die Anzahl der Hilfsreferenzlinien HRI und der Zeitabstände T ergeben eine Zyklusfrequenz für die Richtungsbildung. Nach Durchlauf einer Dreiecksfunktion ist eine Zykluszeit a·τ erreicht, deren Kehrwert die Zyklusfrequenz angibt. Damit diese Zyklusfrequenz nicht bei einer Auswertung des gemittelten Gruppensignals nach dem DEMON-Verfahren stört, bei dem das gemittelte Gruppensignal nach einer Bandbegrenzung demoduliert wird und Harmonische des demodulierten Spektrums bestimmt wird, die im gleichen Frequenzbereich wie die Zyklusfrequenz liegt, wird die Zyklusfrequenz variiert, wie in Fig. 5 gezeigt ist.

Die Zeitabstände T sind die gleichen wie die in Fig. 4, aber die Vergrößerung und anschließende Verkleinerung des Abstandes c·t der Hilfsreferenzlinie von der Referenzlinie erfolgt von Zyklus zu Zyklus in kürzeren Zeiten a·τ, b·τ, c·τ, so daß die Zyklusfrequenz nicht konstant ist, sondern zwischen zwei Grenzwerten entsprechend einem Frequenzsweep ansteigt und abnimmt. Bei einer DEMON-Auswertung des gemittelten Gruppensignals bilden sich durch diese Maßnahme keine signifikanten Spektrallinien im Frequenzspektrum des demodulierten Gruppensignals.

Zum Ermitteln eines optimalen Abstands x·c·T für eine einzige konstante Hilfsreferenzlinie anstelle einer Mittelung über viele Hilfsreferenzlinien wird ein solcher Pegelverlauf gemäß Fig. 3 für die Empfangsanordnung simuliert. Der optimale Abstand liegt im Falle einer Zylinderbasis und bei einer quantisierten Laufzeitverzögerung in Abtastperioden T bei OPT1 oder OPT2, nämlich dort, wo die Pegelabweichungen der Amplituden für sämtliche Schwenkwinkel Δα am geringsten sind. In diesem Fall wird die optimale Hilfsreferenzlinie im Abstand ΔT₂·c zur Referenzlinie angeordnet.

Aus der DE-OS 21 36 780 ist eine bessere Annäherung der Gesamtverzögerung für jedes Empfangssignal beschrieben, indem die der quantisierten Laufzeitverzögerung in Abtastperioden T hinzuzufügende Restzeit Δt durch eine Restphasenverschiebung des Empfangssignals angenähert wird. Bezugnehmend auf Fig. 2 werden beispielsweise für die notwendige Gesamtverzögerung t₄ zwei Abtastwerte des Empfangssignals des Wandlers W₄, zwischen denen eine Abtastperiode T liegt, herangezogen. Für den Wandler W₄ weist der erste Abtastwert eine zeitliche Verzögerung 6T auf, die kleiner als die notwendige Gesamtverzögerung t₄ gemäß Fig. 1 ist. Der zweite Abtastwert weist eine zeitliche Verzögerung 7T auf, die größer als die notwendige Gesamtverzögerung t₄ ist. Die im Laufzeitdiagramm in Fig. 2 eingezeichnete Restzeit Δt₄₁ wird durch eine Restphasenverschiebung angenähert. Die nötige Gesamtverzögerung t₄ setzt sich aus der quantisierten Laufzeitverzögerung von sechs Abtastperioden 6T und einer Restphase entsprechend der Restzeit Δt₄₁ zusammen. Die Restphasenverschiebung ist nur für eine einzige Frequenz gleich der Restzeit Δt₄₁, nämlich für die Bezugs- oder Mittenfrequenz des breitbandigen Empfangssignals.

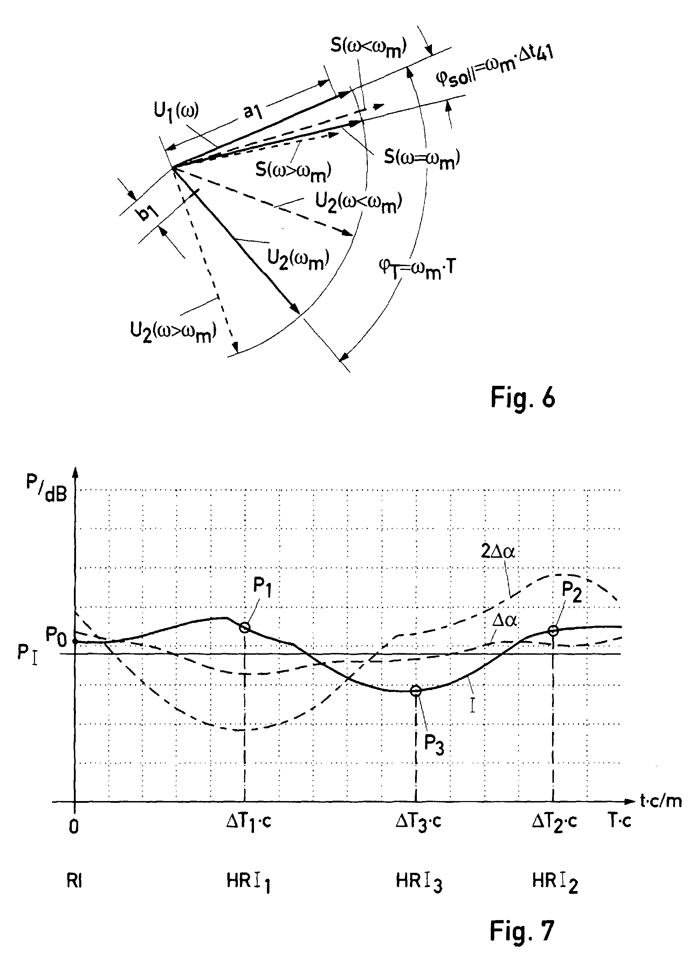

Fig. 6 zeigt in einem Zeigerdiagramm das Prinzip der Restphasenverschiebung des um die Laufzeit von sechs Abtastperioden 6T verzögerten Empfangssignals des Wandlers W₄ auf eine der Restzeit Δt₄₁ = τ₁ entsprechenden Restphase ϕₛₒₗₗ. Die Restphase ϕₛₒₗₗ ist gleich der Restzeit τ₁ multipliziert mit der Kreismittenfrequenz ωₘ. Zwischen den beiden Abtastwerten U₁(ω) = U₁(ωₘ)und U₂(ω) = U₂(ωₘ) des Empfangssignals mit der Kreismittenfrequenz ωₘ liegt eine Phasenverschiebung ϕ_{T} = ωₘ·T. Der erste Abtastwert U₁(ωₘ) mit der Laufzeitverzögerung 6T wird mit einem Faktor al, der zweite Abtastwert U₂(ωₘ) mit der Laufzeitverzögerung 7T mit einem Faktor b1 multipliziert, so daß ihr Summenzeiger S(ω=ωₘ)mit einer Einheitslänge gegenüber dem ersten Abtastwert U₁(ωₘ) um die Restphase ϕₛₒₗₗ verschoben ist. In das gleiche Zeigerdiagramm werden weitere Spektrallinien U₂ (ω>ωₘ) und U₂(ω<ωₘ)des Abtastwerts eingetragen, ihre frequenzabhängigen Phasenverschiebungen gegenüber dem ersten Abtastwert U₁ (ω), die einer Abtastperiode T entsprechen, sind ihren Zeigerlagen zu entnehmen. Nach Bewertung mit den Faktoren al, b1 führt ihre vektorielle Addition für höhere Frequenzen ω>ωₘ als die Kreismittenfrequenzen ωₘ zu einem Summenzeiger S(ω>ωₘ), dessen Länge kleiner als die Einheitslänge und dessen Restphase größer als die Restphase ϕₛₒₗₗ ist, und für niedrige Frequenzen ω<ωₘ als die Kreismittenfrequenz ωₘ zu einem Summenzeiger S(ω<ωₘ), dessen Länge größer als die Einheitslänge und dessen Restphase kleiner als die Restphase ϕₛₒₗₗ ist. Bei einer Abweichung der Frequenz des Empfangssignals von der Bezugs- oder Mittenfrequenz ωₘ treten also Fehler in der Länge des Summenzeigers auf.

Die unterschiedlichen, in der Tabelle angegebenen Restzeiten werden durch Restphasenverschiebungen angenähert. Entsprechend wird mit den Empfangssignalen der übrigen Wandler Wi verfahren. Aus den auf die Referenzlinie und Hilfsreferenzlinien verzögerten Empfangssignalen wird durch Summation und energetischer Mittelung die Amplitude des gemittelten Gruppensignals gewonnen.

Fig. 7 zeigt die Pegel der Gruppensignale bei einer Annäherung der Gesamtverzögerung durch quantisierte Laufzeitverzögerungen zuzüglich einer Restphasenverschiebung in Abhängigkeit von den Abständen t·c der Hilfsreferenzlinien von der Referenzlinie RI, wenn die Frequenz des Empfangssignals von der Mittenfrequenz fₘ abweicht, beispielsweise 2fₘ beträgt, oder breitbandig in einem Bereich bis zur doppelten Mittenfrequenz fₘ liegt. Die durchgezogene Kurve gilt für die Hauptempfangsrichtung I. Bei Verzögerung der Empfangssignale in Bezug auf die Referenzlinie RI weist die Amplitude des Gruppensignals bei t·c=0 einen Pegel P₀ auf. Bei einer Verzögerung auf die Hilfsreferenzlinie HRI₁ mit t·c=ΔT₁·c beträgt der Pegel P₁>P₀. Bei einer Verzögerung auf die Hilfsreferenzlinie HRI₂ mit t·c=ΔT₂·c stellt sich ein Pegel P₂>P₀ ein. Bei einer weiteren Hilfsreferenzlinie HRI₃, die einen Abstand ΔT₃·c von der Referenzlinie RI aufweist, wird ein Pegel P₃<P₀ für die Amplitude des Gruppensignals gemessen. Der Pegelverlauf der Amplituden der Gruppensignale ist abhängig vom Abstand t·c der Hilfsreferenzlinien HRI. Beim Grenzabstand t·c=T·c ist der Pegel gleich P₀ wie bei einer Kompensation auf die Referenzlinie RI bei t·c=0. Der Pegelverlauf ist nahezu sinusförmig. Mittelt man über alle Pegel P, so erhält man einen mittleren Pegel PI für das Gruppensignal der Richtcharakteristik, die in die Hauptempfangsrichtung I weist.

Bei einer Verschwenkung der Hauptempfangsrichtung I der Richtcharakteristik und somit der Referenzlinie RI und der Hilfsreferenzlinien HRI um einen Schwenkwinkel Δα ergibt sich ein Pegelverlauf der Amplituden der einzelnen Gruppensignale entsprechend der gestrichelten Linie. Bei einer Verschwenkung um den Schwenkwinkel 2Δα stellt sich der strichpunktierte Verlauf ein. Eine Mittelung jeweils über die Pegel der auf die Hilfsreferenzlinien HRI und die Referenzlinie RI kompensierten Empfangssignale ergibt auch bei Verschwenkungen nahezu den gleichen Pegel PI, auch wenn die Richtcharakteristiken unabhängig von einem in Fig. 1 gezeigten Wandlerraster geschwenkt werden. Das Diagramm in Fig. 7 zeigt, daß eine Richtungsstabilisierung der Richtcharakteristiken mit einem Kompaß durch ein Verschwenken der Hauptempfangsrichtung, der Referenzlinie und Hilfsreferenzlinien zwischen zwei Kompaßablesungen den Pegel PI des gemittelten Gruppensignals nicht verändert.

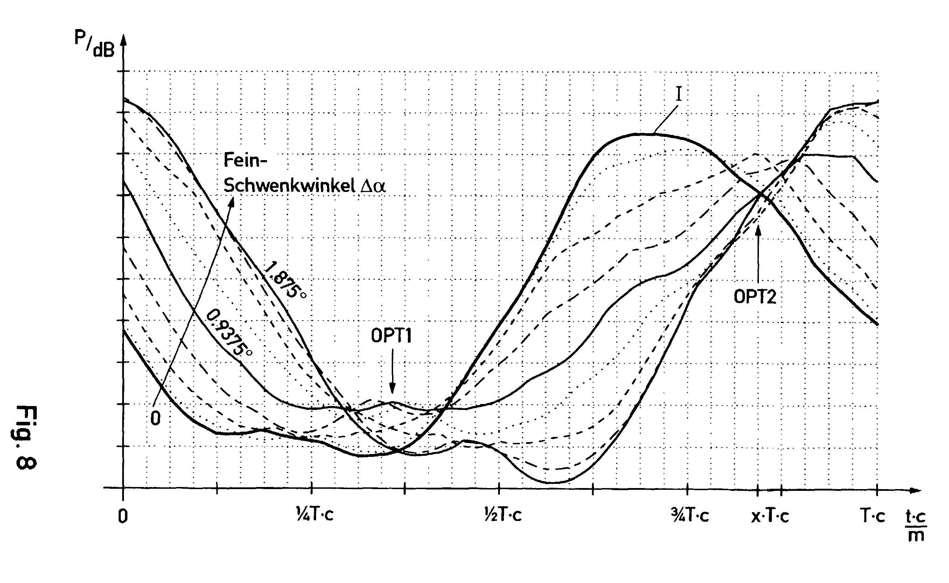

Das Diagramm in Fig. 8 zeigt Pegel P von Gruppensignalen in Abhängigkeit von Abständen t·c für Hilfsreferenzlinien HRI aus Simulationsrechnungen für eine Zylinderbasis für steigende Schwenkwinkel Δα=0, ... bis 1,875° gegenüber der Hauptempfangsrichtung I. Auch hier ist wie in Fig. 7 ein sinusförmiger Pegelverlauf zu verzeichnen.

Mit Hilfe dieser Simulationsrechnungen wird ein Abstand für eine optimale Hilfsreferenzlinie ermittelt, die bei OPT₁ oder OPT₂ liegt, da dort die Pegel für die unterschiedlichen Schwenkwinkel Δα den gleichen Wert aufweisen. Im Abstand x·T·c liegt die optimale Hilfsreferenzlinie, die für die Kompensation der Empfangssignale der Wandler Wi wegen des höheren Pegels der Gruppensignale als bei OPT₁ verwendet wird und anstelle einer Mittelung mit vielen Hilfsreferenzlinien eingesetzt wird.

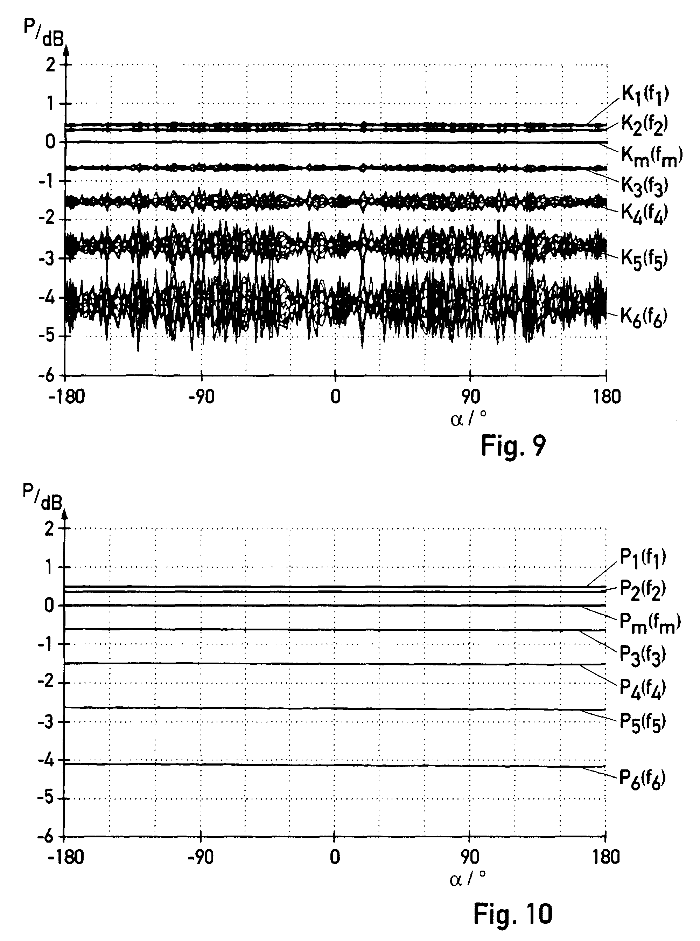

Das erfindungsgemäße Verfahren ist ebenfalls im Zusammenhang mit einer Hufeisenbasis oder einem Conformal Array anwendbar. Fig. 9 zeigt ein Pegeldiagramm für eine Hufeisenbasis. Die Kurven Kₘ,K₁, K₂, ..., K₆ geben Pegeldifferenzen P/dB je Hauptempfangsrichtung für zehn Hilfsreferenzlinien an. Die Hauptempfangsrichtung 0° entspricht voraus, -90° querab nach links, +90° querab nach rechts, -180° und +180° entspricht der Hauptempfangsrichtung nach hinten. Parameter für die Kurven Kₘ, K1, K2, ..., K6 sind Frequenzen fₘ, f₁, f₂, ..., f₆. Bei dem Kurvenzug K6 für die höchste untersuchte Frequenz f₆ sind über den Hauptempfangsrichtungen von -180° bis +180° die Pegeldifferenzen der Gruppensignale für die zehn Hilfsreferenzlinien am größten. Bei der Kurve Kₘ stellen sich keine Pegeldifferenzen ein, da für die Mittenfrequenz fₘ die Restphasenverschiebungen exakt gleich den Restzeiten sind.

Fig. 10 zeigt das Ergebnis der Mittelung für die Pegeldifferenzen P/dB der Gruppensignale. Für jede Frequenz f₁, ..., f₆ ist der Pegel P₁, ..., P₆ des gemittelten Gruppensignals über den Hauptempfangsrichtungen konstant.

## Patentansprüche

1. Verfahren zum Bilden von Gruppensignalen einer oder mehrerer benachbarter Richtcharakteristiken aus breitbandigen, mit einer Abtastfrequenz abgetasteten und verzögerten Empfangssignalen jeweils einer Anzahl von elektroakustischen Wandlern (Wᵢ) einer Empfangsanordnung, bei dem die Empfangssignale mit einem ersten Verzögerungssatz angenäherter Geamtverzögerungen (tᵥ) beaufschlagt werden, die aus dem Lot von jedem Wandler (Wᵢ) auf eine der Anzahl der Wandler (Wᵢ) gemeinsame Referenzlinie (RI) senkrecht zur Hauptempfangsrichtung (I) der Richtcharakteristik geteilt durch die Schallgeschwindigkeit (c) berechnet und durch eine Zahl (q) von Abtastperioden (T) als quantisierte Laufzeitverzögerung mit oder ohne zusätzlicher Restphasenverschiebung angenähert werden, dadurch gekennzeichnet, daß ein Grenzabstand (c·T) aus dem Produkt von Schallgeschwindigkeit (c) und Abtastperiode (T) bestimmt wird, daß eine oder mehrere Hilfsreferenzlinien (HRI) in einem Abstand (c·t) kleiner als der Grenzabstand (c·T) parallel zur Referenzlinie (RI) vorgesehen und der gleichen Richtcharakteristik zugeordnet werden, daß aus dem Lot jedes Wandlers (Wᵢ) der Anzahl (n) auf die gleiche Hilfsreferenzlinie (HRI) ein Satz von Hilfsgesamtverzögerungen berechnet und durch einen weiteren Verzögerungssatz von quantisierten Laufzeitverzögerungen aus einer Zahl (q) von Abtastperioden (T) mit oder ohne zusätzlicher Restphasenverschiebung angenähert werden, daß alle mit dem ersten und den weiteren Verzögerungssätzen beaufschlagten Empfangssignale addiert und energetisch gemittelt werden und eine Amplitude des gemittelten Gruppensignals der Richtcharakteristik liefern.

2. Verfahren nach Anspruch 1, dadurch gekennzeichnet, daß nacheinander Verzögerungssätze für die Hilfsreferenzlinie (HR) mit steigendem Abstand (c·t) von der Referenzlinie (R) bis zum Grenzabstand (c·T) und anschließend rückwärts bis zur Referenzlinie (R) in konstanten Zeitabständen (τ) wiederholt bereitgestellt werden und daß der Zeitabstand (*τ*) größer oder gleich einer Signalverarbeitungszeit für die Bewertung der Empfangssignale mit dem Verzögerungssatz und ihre Addition gewählt wird.

3. Verfahren nach Anspruch 2, dadurch gekennzeichnet, daß Zykluszeiten für jede Wiederholung variabel wählbar sind.

4. Verfahren nach Anspruch 1, dadurch gekennzeichnet, daß durch Simulationsrechnung ein optimaler Abstand (x·T·c) für eine einzige Hilfsreferenzlinie ermittelt wird, bei der die Gruppensignale der Richtcharakteristiken auch bei kleinen Schwenkwinkeln vernachlässigbare Amplitudenfehler aufweisen.

5. Verfahren nach einem der Ansprüche 1 bis 4, dadurch gekennzeichnet, daß die Empfangsanordnung an Bord eines Fahrzeugs installiert ist, daß die Hauptempfangsrichtung (I) der Richtcharakteristik mit ihrer Referenzlinie (RI) und ihren Hilfsreferenzlinien (HRI) in vorgebbaren Zeitintervallen so geschwenkt wird, daß sie zur geographischen Nordrichtung einen festen Bezug aufweist, daß innerhalb jedes Zeitintervalls die Empfangssignale mit den auf die verschwenkten Referenz- und Hilfsreferenzlinien (RI, HRI₁, HRI₂) bezogenen Verzögerungssätzen beaufschlagt und zum gemittelten Gruppensignal zusammengefaßt werden.

6. Verfahren nach einem der Ansprüche 1 bis 5, dadurchgekennzeichnet, daß Amplituden der gemittelten Gruppensignale benachbarter sich überlappender Richtcharakteristiken Stützstellen einer Scheitelkurve bilden, deren Scheitel bestimmt wird und die Einfallsrichtung der Schallwellen angibt.

7. Verfahren nach einem der Ansprüche 1 bis 6, dadurch gekennzeichnet, daß Restzeiten aus Gesamt- oder Hilfsgesamtverzögerung abzüglich der quantisierten Laufzeitverzögerung (q·T) ermittelt werden und bei einer Bezugs- oder Mittenfrequenz des Empfangssignals gleich einer Restphasenverschiebung sind, daß für jeden Verzögerungssatz zeitsequentiell oder zeitparallel nach Ablauf der quantisierten Laufzeitverzögerung (q·T) mehrere aufeinanderfolgend abgetastete Empfangssignale zu einem Sollsignal vorgebbarer Amplitude und Phasenlage (ϕₛₒₗₗ) interpoliert werden, welches das zusätzlich um die Restphasenverschiebung verzögerte Empfangssignal bildet.

8. Verfahren nach einem der vorangegangenen Ansprüche 1 bis 6 dadurch gekennzeichnet, daß Restzeiten aus Gesamt- oder Hilfsgesamtverzögerung abzüglich der quantisierten Laufzeitverzögerung (q·T) ermittelt werden und bei einer Bezugs- oder Mittenfrequenz des Empfangssignals gleich einer Restphasenverschiebung sind, daß zwei aufeinanderfolgend abgetastete Empfangssignale (u₁, u₂) vor einer Addition zu einem Sollsignal mit Faktoren (a₁, b₁) bewertet werden, daß die Faktoren (a₁, b₁) so gewählt werden, daß die Amplitude des Sollsignals eine Einheitslänge aufweist und die Phasenlage (ϕₛₒₗₗ) des Sollsignals gleich der Restphasenverschiebung ist und das Sollsignal das verzögerte Empfangssignal bildet.

## Claims

1. Method for forming group signals of one or more adjacent directional characteristics from broadband received signals which are sampled at a sampling frequency and are delayed from a number of electroacoustic transducers (Wᵢ) in a receiving arrangement in each case, in which method the received signals have overall delays (tᵥ) applied to them which approximate to a first delay set, are calculated from the vertical from each transducer (Wᵢ) to a reference line (RI), which is shared by the number of transducers (Wᵢ) at right angles to the main reception direction (I) of the directional characteristic divided by the speed of sound (c), and are approximated by a number (q) of sampling periods (T) as a quantized propagation time delay with or without any additional residual phase shift, characterized in that a limiting interval (c · T) is determined from the product of the speed of sound (c) and the sampling period (T), in that one or more auxiliary reference lines (HRI) are provided at an interval (c · t) which is shorter than the limiting interval (c · T) parallel to the reference line (RI) and are assigned to the same directional characteristic, in that a set of auxiliary overall delays is calculated from the vertical of each transducer (Wᵢ) [lacuna] of the number (n) to the same auxiliary reference line (HRI), and is approximated by a further delay set of quantized propagation time delays from a number (q) of sampling periods (T) with or without any additional residual phase shift, in that all the received signals to which the first and the further delay sets are applied are added and are averaged in terms of energy, and provide an amplitude of the averaged group signal to the directional characteristic.

2. Method according to Claim 1, characterized in that delay sets for the auxiliary reference line (HR) are provided repeatedly and successively with an increasing interval (c · t) from the reference line (R) as far as the limiting interval (c · T), and then backwards as far as the reference line (R) at constant time intervals (τ), and in that the time interval (τ) is chosen to be greater than or equal to a signal processing time for the assessment of the received signals with the delay set, and their addition.

3. Method according to Claim 2, characterized in that cycle times are chosen variably for each repetition.

4. Method according to Claim 1, characterized in that simulation calculation is used to determine an optimum interval (x · T · c) for a single auxiliary reference line, for which the group signals of the directional characteristics have negligible amplitude errors even for small swivel angles.

5. Method according to one of Claims 1 to 4, characterized in that the receiving arrangement is installed on board a vehicle, in that the main reception direction (I) of the directional characteristic is swivelled with its reference line (RI) and its auxiliary reference lines (HRI) at time intervals which can be predetermined, such that it has a fixed reference with respect to the geographic north direction, in that, within each time interval, the received signals have the delay sets applied to them related to the swivelled reference and auxiliary reference lines (RI, HRI₁, HRI₂), and are combined to form the averaged group signal.

6. Method according to one of Claims 1 to 5, characterized in that amplitudes of the averaged group signals of adjacent, overlapping directional characteristics form support points of a peak curve, whose peak is determined and indicates the incidence direction of the sound waves.

7. Method according to one of Claims 1 to 6, characterized in that the remaining times from the overall or auxiliary overall delay less the quantized propagation time delay (q · T) are determined and are equal to a residual phase shift for a reference or mid-frequency of the received signal, in that a number of successively sampled received signals for each delay set are interpolated sequentially in time or in parallel in time once the quantized propagation time delay (q · T) has passed, to form a nominal signal with a predeterminable amplitude and phase angle (ϕₙₒₘ) which forms the received signal additionally delayed by the residual phase shift.

8. Method according to one of the preceding Claims 1 to 6, characterized in that residual times are determined from the overall or auxiliary overall time delay less the quantized propagation time delay (q · T) and are equal to the residual phase shift for a reference or mid-frequency of the received signal, in that two successively sampled received signals (u₁, u₂) are assessed before addition to form a nominal signal with factors (a₁, b₁), in that the factors (a₁, b₁) are chosen such that the amplitude of the nominal signal has a standard length, and the phase angle (ϕₙₒₘ) of the nominal signal is equal to the residual phase shift, and the nominal signal forms the delayed received signal.

## Revendications

1. Procédé pour former des signaux groupés d'un ou de plusieurs diagrammes directionnels voisins composés de signaux reçus à large bande échantillonnés à une fréquence d'échantillonnage et retardés, chacun reçus d'une pluralité de convertisseurs électroacoustiques (Wᵢ) d'un arrangement de réception, avec lequel les signaux reçus sont soumis à des retards totaux (tᵥ) s'approchant d'une première composition retardatrice, lesquels sont calculés à partir de la verticale de chaque convertisseur (Wᵢ) sur une ligne de référence commune (RI) à la pluralité de convertisseurs (Wᵢ) perpendiculairement au sens de réception principal (I) du diagramme directionnel divisée par la vitesse du son (c) et approchés en tant que retard de temps de propagation quantifié avec ou sans déphasage résiduel par une pluralité (q) de périodes d'échantillonnage (T), caractérisé en ce qu'un écart limite (c.T) est déterminé par le produit de la vitesse du son (c) et de la période d'échantillonnage (T), qu'une ou plusieurs lignes de référence auxiliaires (HRI) sont prévues à un écart (c.t) inférieur à l'écart limite (c.T) parallèlement à la ligne de référence (RI) et sont affectées au même diagramme directionnel, qu'un ensemble de retards totaux est calculé sur la même ligne de référence auxiliaire (HRI) à partir de la verticale de chaque convertisseur (Wᵢ) de la pluralité (n) et approché par un autre ensemble de retards de temps de propagation quantifiés parmi une pluralité (q) de périodes d'échantillonnage (T) avec ou sans déphasage résiduel, que tous les signaux reçus soumis au premier ensemble de retards et à l'autre ensemble de retards sont additionnés et soumis à un calcul de leur valeur énergétique et délivrent une amplitude du signal groupé moyen du diagramme directionnel.

2. Procédé selon la revendication 1, caractérisé en ce que les ensembles de retards successifs sont présentés de manière répétitive à intervalles de temps réguliers (τ) pour la ligne de référence auxiliaire (HR) avec un écart (c.t) croissant de la ligne de référence (R) jusqu'à l'écart limite (c.T) et ensuite décroissant jusqu'à la ligne de référence (R) et que l'intervalle de temps (τ) est choisi supérieur ou égal à un temps de traitement du signal pour l'évaluation des signaux reçus avec l'ensemble de retards et leur addition.

3. Procédé selon la revendication 2, caractérisé en ce que les temps de cycle de chaque répétition sont variables.

4. Procédé selon la revendication 1, caractérisé en ce qu'un écart optimal (x.T.c) est déterminé pour chacune des lignes de référence auxiliaires par un calcul de simulation, écart avec lequel les signaux groupés des diagrammes directionnels présentent des défauts d'amplitude négligeables même avec des angles de pivotement faibles.

5. Procédé selon l'une des revendications 1 à 4, caractérisé en ce que l'arrangement de réception est installé à bord d'un véhicule, que la ligne de référence (RI) et les lignes de référence auxiliaires (HRI) du sens de réception principal (I) du diagramme directionnel sont pivotées à intervalles de temps donnés de manière à présenter une référence fixe par rapport à la direction du nord géographique, qu'à l'intérieur de chaque intervalle de temps les signaux reçus sont soumis aux ensembles de retards qui se rapportent aux lignes de référence et aux lignes de référence auxiliaires (RI, HRI₁, HRI₂) pivotées et regroupés pour former un signal groupé moyen.

6. Procédé selon l'une des revendications 1 à 5, caractérisé en ce que les amplitudes des signaux groupés moyens forment les points d'appui de diagrammes directionnels superposés voisins d'une courbe de crêtes dont le sommet est déterminé et indique le sens d'incidence des ondes sonores.

7. Procédé selon l'une des revendications 1 à 6, caractérisé en ce que des temps restants sont déterminés à partir du retard total ou total auxiliaire moins le retard de temps de propagation quantifié (q.T) et qu'ils sont égaux à un déphasage résiduel dans le cas d'une fréquence de référence ou moyenne, que pour chaque ensemble de retards plusieurs signaux reçus successivement échantillonnés sont interpolés chronologiquement ou parallèlement dans le temps après écoulement du retard de temps de propagation quantifié (q.T) en un signal de consigne dont l'amplitude et le déphasage (ϕₛₒₗₗ) peuvent être définis, lequel forme le signal reçu retardé en plus du déphasage résiduel.

8. Procédé selon l'une des revendications précédentes 1 à 6, caractérisé en ce que des temps restants sont déterminés à partir du retard total ou total auxiliaire moins le retard de temps de propagation quantifié (q.T) et qu'ils sont égaux à un déphasage résiduel dans le cas d'une fréquence de référence ou moyenne, que deux signaux reçus (u₁, u₂) échantillonnés successivement sont évalués avec les facteurs (a₁, b₁) avant une addition pour former un signal de consigne, que les facteurs (a₁, b₁) sont choisis de manière à ce que l'amplitude du signal de consigne présente une longueur normalisée et le déphasage (ϕₛₒₗₗ) du signal de consigne est égal au déphasage résiduel et forme le signal de consigne du signal reçu retardé.
